(19) Europäisches Patentamt
European Patent Office
Office européen des brevets

(11) Veröffentlichungsnummer: **0 004 078**
**B1**

(12) **EUROPÄISCHE PATENTSCHRIFT**

(45) Veröffentlichungstag der Patentschrift: **07.04.82**

(51) Int. Cl.³: **G 03 F 3/08**, G 03 B 27/73

(21) Anmeldenummer: **79100701.6**

(22) Anmeldetag: **08.03.79**

(54) **Farbkorrekturverfahren und Schaltung zu seiner Durchführung.**

(30) Priorität: **10.03.78 DE 2810430**

(43) Veröffentlichungstag der Anmeldung:
**19.09.79 Patentblatt 79/19**

(45) Bekanntmachung des Hinweises auf die Patenterteilung:
**07.04.82 Patentblatt 82/14**

(84) Benannte Vertragsstaaten:
**BE CH FR GB IT LU NL**

(56) Entgegenhaltungen:
**FR - A - 2 077 023**

(73) Patentinhaber: **DR.-ING. RUDOLF HELL GmbH**
**Grenzstrasse 1-5**
**D-2300 Kiel 14 (DE)**

(72) Erfinder: **Gall, Ferenc**
**Am Vogelsang 139**
**D-8000 München 82 (DE)**

**EP 0 004 078 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Farbkorrekturverfahren und Schaltung zu seiner Durchführung

Die Erfindung betrifft ein Verfahren zur Korrektur der Farben eines Bildes, wobei das Bild in eine Anzahl von Bildpunkten zerlegt wird, sowie eine Vorrichtung zu seiner Durchführung.

Es ist in der Farbfernsehtechnik wie auch in der militärischen digitalen Bildverarbeitung bekannt, eine Farbkorrektur durch Änderungen an den drei Grundfarben vorzunehmen. Die sich dabei ergebenden korrigierten Bilder sind hinsichtlich ihrer Farblichkeit bzw. Farbtönung gegenüber den Ausgangsbildern stark verändert. Der Vorteil dieser dreimal eindimensionalen Farbkorrektur liegt in der Einfachheit und Schnelligkeit, mit der es durchgeführt werden kann, ein erheblicher Nachteil jedoch darin, daß die Korrekturmöglichkeiten auf globale Änderungen beschränkt bleiben.

In der graphischen Scannertechnik ist es dagegen überlich, die in analoger Form vorliegenden Farbsignale durch Differenzbildung und Addition so zu kombinieren, daß der Farbenraum in meist acht etwa gleich große Bereiche geteilt wird (rot, orange, gelb, grün, blau, violett, rosa, braun), in denen dann selektiv Korrekturen vorgenommen werden können. Dieses Verfahren hat den Nachteil, daß einerseits digital vorliegende Daten kaum analog korrigiert werden können, andererseits die Aufteilung des Farbraums in feste Bereiche nicht genügend Flexibilität bietet. In der Drucktechnik ist es weiterhin durch die DE—A—21 03 311 (entspricht der GB—A—1,294,191 und der FR—A—2077023) bekannt, eine Farbtonkorrektur mit Hilfe der drei analog vorliegenden Farbsignale vorzunehmen. Diese Farbtonkorrektur besitzt eine einstellbare analog arbeitende Schaltung zur Erkennung und Veränderung des Farbtons und dient zur Korrektur von Hauttönen. Die Korrektur wirkt maximal bei dem eingestellten Farbton, nimmt schnell ab, wenn der abgetastete Farbton von dem zu erkennenden Farbton abweicht und wird Null, wenn die Abweichung des abgetasteten Farbtons von dem zu erkennenden Farbton einen vorgegebenen Betrag übersteigt. Der Nachteil dieser Art der Korrektur ist, daß sie nur in einem eng begrenzten Bereich wirkt und daß die Wirkungsbreite und auch der Verlauf der Korrekturwirkung nicht veränderbar sind.

Es ist ferner ein digitales Verfahren bekannt, bei dem ein Prozeßrechner vor der Bildkorrektur ein Stützpunktnetz von Korrekturfaktoren oder von korrigierten Farbwerten im dreidimensionalen Farbenraum berechnet und in einem schnellen Speicher aufbaut. Danach laufen die Bildpunkte in das Stützpunktnetz, wobei die ersten 4—6 Bits jedes Farbanteils als Adresse des Stützpunktnetzes benutzt werden und der Rest zur Bestimmung des Interpolationsmaßstabes bei dem dem Stützpunktnetz nachgeschalteten Interpolator. Dieses Verfahren ermöglicht eine hohe Korrekturgeschwindigkeit und beliebige selektive Korrekturen, hat jedoch den erheblichen Nachteil, daß vor der Korrektur das Stützpunktnetz aufgebaut werden muß, was unverhältnismäßig lange Zeit in Anspruch nimmt.

Aufgabe der Erfindung ist daher die Schaffung eines Farbkorrekturverfahrens, welches insgesamt eine schnelle und selektive Farbkorrektur ermöglicht. Diese Aufgabe wird ausgehend von dem im Oberbegriff des Anspruchs 1 definierten Verfahren dadurch gelöst, daß um die Spitze des der maximal zu korrigierenden Farbe zugeordneten Vektors im Farbenraum ein räumlich beschränkter Bereich ausgewählt wird, daß für jeden der farbzukorrigierenden Bildpunkte geprüft wird, ob der ihm zugeordnete Farbvektor mit seiner Spitze in diesem Bereich liegt, daß für mit ihrer Spitze innerhalb dieses Bereichs liegende Farbvektoren eine Korrektur durch Addition eines Farbkorrekturvektors vorgenommen wird, der aus einem frei wählbaren Vektor und einer Uberlagerungsgröße gebildet wird, die den Farbkorrekturvektor maximal macht, wenn der zu korrigierende Farbvektor mit dem Vektor der maximal zu korrigierenden Farbe zusammenfällt, und den Farbkorrekturvektor umso näher bei Null liegen läßt, je näher die Spitze des zu korrigierenden Farbvektors am Rand dieses Bereichs liegt und daß für mit ihrer Spitze außerhalb dieses Bereichs liegende Farbvektoren keine Korrektur erfolgt.

Mit einem solchen Verfahren läßt sich insbesondere bei digitaler Darstellung der Farbvektoren mit Hilfe einer Rechenlogik eine hohe Arbeitsgeschwindigkeit erzielen. Die freie Vorgabe der maximal zu korrigierenden Farbe und des sie umgebenden Farbbereichs, für den überhaupt nur eine Korrektur ausgeführt wird, verleiht dem erfindungsgemäßen Verfahren eine große Flexibilität. So ist es beispielsweise möglich, in einem Bild allein die Brauntöne zu korrigieren und andere Farbtöne unangetastet zu lassen. Würde hingegen eine Korrektur der Brauntöne durch Korrekturen an den drei Grundfarben versucht, so würde dies zwangsläufig zu einer Verschiebung auch anderer Farbtöne, die ja ebenfalls aus den drei Grundfarben aufgebaut sind, führen. Die nach dem erfindungsgemäßen Verfahren erfolgende Abschwächung der Farbkorrektur, die umso stärker ist, je weiter sich die zu korrigierende Farbe von der maximal zu korrigierenden Farbe entfernt, stellt sicher, daß sich weich verlaufende Korrekturen ergeben und das korrigierte Bild in sich keine durch unerwünschte Farbsprünge entstandenen Farbränder aufweist.

Um eine geeignete Abschwächung der Farbkorrektur mit zunehmender Annäherung des zu korrigierenden Farbvektors an den Rand des im Farbenraum definierten Korrekturbereichs zu erreichen, ist es besonders zweckmäßig die den Farbkorrekturvektor mitbestimmende Überlagerungsgröße als Funktion des Minimums der Verhältnisse der Abstände der Spitze des Vektors der zu korrigierenden Farbe von den Punkten des Bereichsrandes zu den Abständen der Spitze des Vektors de maximal zu korrigierenden Farbe von den jeweils gleichen Punkten des Bereichsrandes zu bestimmen. Der Bereich im Farbenraum wird dabei bevorzugt so gewählt, daß er sich mathematisch leicht fassen läßt. Bevorzugt kann daher der Bereich als Kugel gewählt werden. Dies wird insbesondere bei Darstellung der Farbvektoren im Farbenraum in Polarkoordinaten angebracht sein. Bei Verwendung kartesischer Koordinaten erweist sich als höchst zweckmäßig, als Bereich einen Würfel mit zu den Achsen des Farbenraums parallelen Seiten zu verwenden. Dabei ist es besonders vorteilhaft, die Uberlagerungsgröße als das Minimum der Verhältnisse der Abstände der Spitze des Vektors der zu korrigierenden Farbe von den Würfelflächen zu den Abständen der Spitze des Vektors der maximal zu korrigierenden Farbe von den jeweils gleichen Würfelflächen zu bestimmen. Es wird also für jede Würfelfläche der Abstand der Spitze des Vektors der zu korrigierenden Farbe als auch der Abstand der Spitze des Vektors der maximal zu korrigierenden Farbe zu ihr bestimmt. Für jede Würfelfläche werden diese Abstände, mit dem Abstand der Spitze des Vektors der maximal zu korrigierenden Farbe als Divisor, ins Verhältnis zueinander gesetzt. Das Minimum dieser Verhältnisse wird als Überlagerungsgröße verwendet. Mit dieser Überlagerungsgröße als Faktor wird der frei wählbare Vektor multipliziert. Fällt daher der zu korrigierende Farbvektor mit dem Vektor der maximal zu korrigierenden Farbe zusammen, dann ist der Faktor gleich 1 und der Farbkorrekturvektor gleich dem frei wählbaren Vektor, nähert sich der Vektor der zu korrigierenden Farbe dem Rand des Farbkorrekturwürfels, dann geht der Faktor und damit der Farbkorrekturvektor gegen Null. Bei Verwendung des oben definierten Minimums der Verhältnisse direkt als Faktor für den frei wählbaren Vektor erhält man eine lineare Abnahme der Korrektur zum Rand des Farbkorrekturbereichs hin. Die Überlagerungsgröße kann aber auch irgendeine Funktion des Minimums der Verhältnisse sein, die monoton (beispielsweise glockenförmig) von 1 nach 0 fällt, wenn das Minimum der Verhältnisse von 1 nach 0 geht.

Gemäß einer bevorzugten Ausgestaltung der Erfindung wird das Farbbild auf einem Bildschirm wiedergegeben und die maximal zu korrigierende Farbe und/oder der Bereich, insbesondere also der Würfel, hinsichtlich Lage und Größe entsprechend den visuellen Beobachtungen am Bildschirm eingestellt. Bevorzugt wird hierbei das Verfahren so ausgestaltet, daß in dem auf dem Bildschirm wiedergegebenen Bild die ursprünglichen Farben durch die korrigierten Farben ersetzt werden. Um die Möglichkeit zu schaffen, daß eine und derselbe Farbton in einem Teil des Bildes unverändert bleibt, in einem anderen aber korrigiert wird, werden gemäß einer bevorzugten Ausgestaltung des Verfahrens Teile des Bildes unabhängig von den Farben der darin enthaltenen Bildpunkte von der Korrektur ausgenommen.

Ferner schafft die Erfindung eine Logikschaltung zur Durchführung des erfindungsgemäßen Verfahrens, welche eine mit den bereichsdefinierenden Koordinaten und den Koordinaten des Farbvektors des untersuchten Bildpunktes beaufschlagte erste Vergleicherschaltung, eine mit den bereichsdefinierenden Koordinaten und den Koordinaten des Vektors der maximal zu korrigierenden Farbe beaufschlagte erste Subtrahierschaltung, eine mit den bereichsdefinierenden Koordinaten und den Koordinaten des Farbvektors des untersuchten Bildpunkts beaufschlagte zweite Subtrahierschaltung, eine mit den Ausgangsgrößen der ersten und zweiten Subtrahierschaltung beauftragte Dividierschaltung zur Bestimmung der Quotienten ihrer Eingangsgrößen, eine mit der Ausgangsgröße der Dividierschaltung beaufschlagte zweite Vergleicherschaltung zur Bestimmung des minimalen der Quotienten, eine mit der Ausgangsgröße der zweiten Vergleicherschaltung beaufschlagte Schaltung zur Ausgabe der Überlagerungsgröße in Abhängigkeit von der Ausgangsgröße der zweiten Vergleicherschaltung, eine mit der Ausgangsgröße der Schaltung zur Ausgabe der Überlagerungsgröße und den Koordinaten eines frei wählbaren Vektors beaufschlagte Multiplizierschaltung und eine mit den Koordinaten des zu korrigierenden Farbvektors und der Ausgangsgröße der Multiplizierschaltung beaufschlagte Addierschaltung mit Inhibiereingang, welcher mit der Ausgangsgröße der ersten Vergleicherschaltung beaufschlagt ist, aufweist.

Auf der einzigen Figur der Zeichnung ist ein Blockschaltbild einer Ausführungsform der Logikschaltung gemäß der Erfindung für den Fall gezeigt, daß der Korrekturbereich ein Würfel mit zu den Achsen des Farbenraums parallelen Seiten ist. Einer ersten Vergleicherschaltung 1 werden die Koordinaten des Farbvektors $FP_{xyz}$ des gerade betrachteten Bildpunktes einerseits und die den Korrekturwürfel bestimmenden Koordinaten $O_{xyz}$ andererseits eingegeben. Ergibt der Vergleich der Koordinaten, daß die Spitze des Farbvektors des betrachteten Bildpunktes im Farbkorrekturwürfel liegt, so wird in einer Addierschaltung 8, der einerseits die Farbkoordinaten des betrachteten Bildpunktes und andererseits die Koordinaten eines Farbkorrekturvektors $KV_{xyz}$ eingegeben werden, eine Addition dieser beiden Vektoren durchgeführt, die einen korrigierten Farbvektor $KFP_{xyz}$ für den betrachteten Bildpunkt ergibt. Ist das Ergebnis des Vergleichs in der ersten Vergleicherschaltung 1 umgekehrt der, daß der Farbvektor des betrachteten Bildpunktes mit seiner Spitze nicht im Farbkorrekturwürfel liegt, dann wird die Addierschaltung 8 durch das Ausgangssignal der Vergleicherschaltung 1 inhibiert.

Die den Farbkorrekturwürfel definierenden Koordinaten werden ferner einer Subtrahierschaltung 2 eingegeben, der andererseits die Koordinaten des Vektors der maximal zu korrigierenden Farbe $MKF_{xyz}$ eingegeben werden. Durch Differenzbildung in der Subtrahierschaltung 2 werden die Abstände $AM_{xyz}$ der Spitze des Vektors der maximal zu korrigierenden Farbe von den Flächen des Farbkorrekturwürfels bestimmt. In eine zweite Subtrahierschaltung 3 werden einerseits die den Farbkorrekturwürfel definierenden Koordinaten $O_{xyz}$ und andererseits die Koordinaten des Farbvektors $FP_{xyz}$ des betrachteten Bildpunkts eingegeben. Die in der Subtrahierschaltung 3 durchgeführte Differenzbildung liefert die Abstände $AF_{xyz}$ der Spitze des Farbvektors von den Flächen des Farbkorrekturwürfels. In einer Dividierschaltung, die an ihren Eingängen einerseits die Abstände für den Vektor der maximal zu korrigierenden Farbe und andererseits die Abstände für den Vektor der Farbe des betrachteten Bildpunkts erhält, werden durch Division relative Abstände $RA_{xyz}$ bestimmt. In einer zweiten Vergleicherschaltung 5, die eingangsseitig diese relativen Abstände erhält, wird das Minimum MRA der relativen Abstände festgestellt. Das Minimum der relativen Abstände wird einer Schaltung 6 eingegeben, welche an ihrem Ausgang eine mit dem minimalen relativen Abstand monoton zwischen 0 und 1 verlaufende Funktion ausgibt. Diese monotone Funktion kann linear oder komplizierter (beispielsweise glockenförmig) mit dem Minimum der relativen Abstände zusammenhängen. Die monotone Funktion wird einer Multiplizierschaltung 7 eingegeben, der andererseits die Koordinaten eines frei wählbaren Vektors $FV_{xyz}$ im Farbenraum eingegeben werden. Die Multiplizierschaltung 7 erzeugt durch Multiplikation der monotonen Funktion des Minimums der relativen Abstände mit dem frei gewählten Vektor im Farbenraum den Farbkorrekturvektor $KV_{xyz}$, der der Addierschaltung 8 zur Addition mit dem Farbvektor des betrachteten Bildpunktes eingegeben wird. Die monotone Funktion stellt damit die Überlagerungsgröße für den frei gewählten Vektor im Farbenraum dar.

In dem in der Figur wiedergegebenen Blockschaltbild sind die Datenleitungen vereinfacht dargestellt. Im allgemeinen werden die Daten im 24-Bit Parallelwort-Format verarbeitet, wobei jedes 24-Bit Parallelwort die Farbinformation eines Elementarbereichs des Bildes darstellt und die drei Vektorkomponenten in Richtung der Koordinatenachsen mit 8-Bit-Auflösung für jede Komponente (eine höhere Auflösung ist natürlich ebenfalls möglich) beschreibt. Deshalb sind mit Ausnahme der MRA und KM übertragenden Leitungen, welche 8-Bit Parallelleitung sind, alle anderen Leitungen 24-Bit Parallelleitungen. Dementsprechend bestehen die gezeigten Blöcke 1, 2, 3, 4, 5, 7 und 8 aus jeweils drei unabhängigen Systemen, von denen jedes für 8-Bit Paralleldaten eingerichtet ist. Nur der Block 6 führt eine einzelne 8-Bit Tabellennachschlagfunktion durch.

Die Korrekturparameter $O_{xyz}$, $MKF_{xyz}$ und $FV_{xyz}$ sind statisch (d.h. sie werden nur sehr langsam von Hand geändert), während $FP_{xyz}$ und $KVP_{xyz}$ schnelle Daten, entsprechend Kathodenstrahlröhren-Bildwiederholdatengeschwindigkeiten oder schnellen Computer-Eingabe/Ausgabegerschwindigkeiten sind. Zusätzliche Taktschaltungen zur zeitlichen Steuerung des Datenflusses durch die gesamte Logikschaltung sind nicht gezeigt. Insbesondere für Kathodenstrahlröhren-Datengeschwindigkeiten würde eine Taktschaltung einen schnellen fifo (first in — first out-) Speicher in der $FP_{xyz}$-Leitung enthalten, um die Verzögerung der Signallaufzeit durch die Schaltung zu kompensieren. Ansonsten würde die Addierschaltung 8 nicht in der gewünschten Weise arbeiten, d.h. nicht das richtige berechnen. Das Blockschaltbild zeigt ferner nicht die Eingabe- und Ausgabezwischenspeicher (latches) an den einzelnen Blöcken, welche für einen zeitrichtigen Ablauf notwendig sind.

Die Farbvektoren aller Bildpunkte können von einem Digitalspeicher her angeboten werden. Bevorzugt wird dabei so vorgegangen, daß eine repräsentative Auswahl der gespeicherten Bildpunkte über einen Farbbildschirm wiedergegeben wird, wobei die Schaltung bzw. das Rechnerprogramm so aufgebaut sind, daß im dargestellten Bild jeweils die ursprünglichen Farben durch die korrigierten Farben ersetzt werden. Durch Betrachten des Bildschirms kann die Bedienungsperson dann entscheiden, wie der Frei wählbare Vektor, der nach Multiplikation mit der Überlagerungsgröße den Farbkorrekturvektor ergibt, zu wählen ist. Die Eingabe des frei wählbaren Vektors in das System kann mit Hilfe von Drehknöpfen oder dergleichen erfolgen. Ebenso werden gemäß dem auf dem Bildschirm Gesehenen Lage und Größe des Farbkorrekturwürfels bezüglich des Vektors der maximal zu korrigierenden Farbe eingestellt. Dabei kann es höchst zweckmäßig sein, den Farbkorrekturwürfel (oder gegebenenfalls auch anders geformten Bereich) mit seinem Mittelpunkt nicht auf die Spitze des Vektors der maximal zu korrigierenden Farbe zu setzen. Wenn nach der ersten Korrektur die Farbwerte nicht zufriedenstellend sind, kann eine erneute Korrektur mit einem veränderten Farbkorrekturvektor vorgenommen werden. Die Darstellung nur einer repräsentativen Auswahl von Bildpunkten auf dem Bildschirm führt deshalb nicht zu Schwierigkeiten, weil wegen der hohen Präzision und Wiederholgenauigkeit des erfindungsgemäßen Verfahrens die nicht dargestellten Bildpunkte in exakt der gleichen Weise korrigiert werden können wie die auf dem Bildschirm dargestellten.

Eine weitere Ausgestaltung des Verfahrens besteht darin, die Farbkorrektur nicht mit Hilfe einer eigens aufgebauten Logikschaltung, sondern über einen freiprogrammierbaren Rechner unter Verwendung entsprechender Rechnerprogramme durchzuführen. Der frei wählbare Vektor kann dann beispielsweise über einen Fernschreibterminal des Rechners eingegeben werden.

Das erfindungsgemäße Farbkorrekturverfahren eignet sich insbesondere für die graphische Bildreproduktion. Ein Beispiel für eine solche Bildreproduktion unter Verwendung des erfindungsgemäßen Farbkorrekturverfahrens ist im folgenden kurz umrissen:

Das zu reproduzierende Bild wird in einem Scanner abgetastet, wonach die drei Grundfarben Gelb, Magenta and Cyan in einer Farbauszugsschaltung ausgezogen werden. Die Daten der ausgezogenen Farben werden in einem Analog-Digitalwandler digitalisiert, wobei die so gewonnenen digitalen Daten die Feinbilddaten darstellen. Diese Feinbilddaten werden in einer entsprechenden Schaltung (Average-down-Schaltung) unter Verwendung einer bestimmten Mitteilungsfunktion einer Mittelwertbildung unterworfen, um die Anzahl der Daten so weit zu reduzieren, daß sie als Grobbild auf einem Farbfernseh-Bildschirm, der ja eine begrenzte Auflösung (von üblicherweise maximal 512 × 512 Punkten) hat, darstellbar sind. Die Feinbilddaten werden in einem durch einen Hauptrechner gesteuerten Massenspeicher gespeichert, während die Grobbilddaten (über diesen Hauptrechner) auf ein graphisches Dialogterminal gegeben werden. Das graphische Dialogterminal enthält einen für die Bildwidergabe auf dem Fernsehschirm notwendigen Bildwiederholspeicher und zwischen diesem und der Fernsehröhre liegend die im Prinzip in der Figur gezeigte Hardware-Korrekturschaltung. Im Dialogterminal werden also die Bilddaten nach dem erfindungsgemäßen Verfahren korrigiert. Die Korrektur wird durch eine Bedienungskraft gehandhabt, die vor dem Bildschirm sitzt und die Korrekturparameter von Hand, etwa über mit der Hardware-Korrekturschaltung verbundene Knöpfe, Schwenkhebel oder dergleichen, entsprechend dem visuellen Eindruck des unmittelbar wiedergegebenen korrigierten Farbbildes ändert. Diese Unmittelbarkeit der Wiedergabe des farbkorrigierten Bildes wird durch die Hardware-Korrekturschaltung geleistet. Gemäß den Standard-Fernsehfrequenzen oder höheren Frequenzen von Hochauflösungsröhren arbeitet die Hardware-Korrekturschaltung (mit den heute verfügbaren Bausteinen ohne weiteres realisierbar) mit einer Datendurchlaufgeschwindigkeit von 6 bis 10 MHz. Grundsätzlich kann das Bild auch unter Verwendung von Software, d.h. unter Verwendung eines entsprechend programmierten Rechners, korrigiert werden, die längeren Rechenzeiten würden es jedoch nicht gestatten, das korrigierte Bild unmittelbar wiederzugeben.

Sobald die Bedienungsperson mit dem korrigierten Bild zufrieden ist, kann sie einen entsprechenden Knopf drücken, wodurch die korrigierten Parameter zurück an den Hauptrechner gesandt werden, welcher seinerseits diese Parameter und die Feinbilddaten an eine zweite Hardware-Farbkorrekturschaltung sendet, die ähnlich wie die oben erwähnte Hardware-Korrekturschaltung aufgebaut ist und die Korrektur der Feinbilddaten vornimmt. Diese zweite Hardware-Korrekturschaltung arbeitet mit der vollen Datenübertragungsgeschwindigkeit des Hauptrechners. Von ihr werden die korrigierten Feinbilddaten auf eine Rasterungsschaltung, die den Bildraster erzeugt, und von dieser auf ein Bildaufzeichnungsgerät gegeben.

## Patentansprüche

1. Verfahren zur Korrektur der Farben eines Bildes, bei welchem das Bild in eine Anzahl von Bildpunkten zerlegt wird, eine maximal zu korrigierende Farbe ausgewählt wird, die Farben der Bildpunkte umso stärker korrigiert werden, je näher diese Farben im Farbraum bei der maximal zu korrigierenden Farbe liegen und von einem vorgebbaren Abstand im Farbenraum zwischen der abgetasteten Farbe eines Bildpunktes und der maximal zu korrigierenden Farbe an keine Korrektur mehr erfolgt, dadurch gekennzeichnet, daß um die Spitze des der maximal zu korrigierenden Farbe zugeordneten Vektors im Farbenraum ein räumlich beschränkter Bereich ausgewählt wird, daß für jeden der farbzukorrigierenden Bildpunkte geprüft wird, ob der ihm zugeordnete Farbvektor mit seiner Spitze in diesem Bereich liegt, daß für mit ihrer Spitze innerhalb dieses Bereichs liegende Farbvektoren eine Korrektur durch Addition eines Farbkorrekturvektors vorgenommen wird, der aus einem frei wählbaren Vektor und einer Überlagerungsgröße gebildet wird, die den Farbkorrekturvektor maximal macht, wenn der zu korrigierende Farbvektor mit dem Vektor der maximal zu korrigierenden Farbe zusammenfällt, und den Farbkorrekturvektor umso näher bei Null liegen läßt, je näher die Spitze des zu korrigierenden Farbvektors am Rand dieses Bereichs liegt und daß für mit ihrer Spitze außerhalb dieses Bereichs liegende Farbvektoren keine Korrektur erfolgt.

2. Verfahren nach Anspruch 1, dadurch gekennzeichnet, daß die Überlagerungsgröße als Funktion des Minimums der Verhältnisse der Abstände der Spitze des Vektors der zu korrigierenden Farbe von den Punkten des Bereichsrandes zu den Abständen der Spitze des Vektors der maximal zu korrigierenden Farbe von den jeweils gleichen Punkten des Bereichsrandes bestimmt wird.

3. Verfahren nach Anspruch 1 oder 2, dadurch gekennzeichnet, daß als Bereich eine Kugel verwendet wird.

4. Verfahren nach Anspruch 1 oder 2, dadurch gekennzeichnet, daß als Bereich ein Würfel mit zu den Achsen des Farbenraumes parallelen Seiten verwendet wird.

5. Verfahren nach Anspruch 4, dadurch gekennzeichnet, daß die Überlagerungsgröße als das Minimum der Verhältnisse der Abstände der Spitze des Vektors der zu korrigierenden Farbe von den Würfelflächen zu den Abständen der Spitze des Vektors der maximal zu korrigierenden Farbe von den jeweils gleichen Würfelflächen bestimmt wird.

6. Verfahren nach einem der vorstehenden Ansprüche, dadurch gekennzeichnet, daß das Farbbild auf einem Bildschirm wiedergegeben wird und die maximal zu korrigierende Farbe und/oder der Bereich hinsichtlich Lage und Größe entsprechend den visuellen Beobachtungen am Bildschirm eingestellt werden.

7. Verfahren nach Anspruch 6, dadurch gekennzeichnet, daß in dem auf dem Bildschirm wiedergegebenen Bild die ursprünglichen Farben durch die korrigierten Farben ersetzt werden.

8. Verfahren nach einem der vorstehenden Ansprüche, dadurch gekennzeichnet, daß Teile des Bildes unabhängig von den Farben der darin enthaltenen Bildpunkte von der Korrektur ausgenommen werden.

9. Logikschaltung zur Durchführung des Verfahrens nach Anspruch 1, gekennzeichnet durch eine mit den bereichsdefinierenden Koordinaten und den Koordinaten des Farbvektors des untersuchten Bildpunktes beaufschlagte erste Vergleicherschaltung (1), eine mit den bereichsdefinierenden Koordinaten und den Koordinaten das Vektors der maximal zu korrigierenden Farbe beaufschlagte erste Subtrahierschaltung (2), eine mit den bereichsdefinierenden Koordinaten und denk Koordinaten des Farbvektors des untersuchten Bildpunktes beaufschlagte zweite Subtrahierschaltung (3), eine mit den Ausgangsgrößen der ersten und zweiten Subtrahierschaltung beaufschlagte Dividierschaltung (4) zur Bestimmung der Quotienten ihrer Eingangsgrößen, eine mit der Ausgangsgröße der Dividierschaltung beaufschlagte zweite Vergleicherschaltung (5) zur Bestimmung des minimalen der Quotienten, eine mit der Ausgangsgröße der zweiten Vergleicherschaltung beaufschlagte Schaltung zur Ausgabe der Überlagerungsgröße (6) in Abhängigkeit von der Ausgangsgröße der zweiten Vergleicherschaltung, eine mit der Ausgangsgröße der Schaltung zur Ausgabe der Uberlagerungsgröße und den Koordinaten eines frei wählbaren Vektors beaufschlagte Multiplizierschaltung (7) und eine mit den Koordinaten des Farbvektors des untersuchten Bildpunktes und der Ausgangsgröße der Multiplizierschaltung beaufschlagte Addierschaltung (8) mit Inhibiereingang, welcher mit der Ausgangsgröße der ersten Vergleicherschaltung beaufschlagt ist.

**Claims**

1. Method for correcting the colours of an image, in which the image is divided into a number of image dots, a colour is selected which is to be corrected in maximum degree, the colours of the image dots are corrected the more intensively the closer these colours are situated within the colour space to the colour which is to be corrected in maximum degree and no further correction is performed beyond a presettable interval within the colour space between the scanned colour of an image dot and the colour which is to be corrected in maximum degree, characterised in that a spatially limited area is selected in the colour space around the tip of the vector allocated to the colour which is to be corrected in maximum degree, that a check is made for each of the image dots which are to be colour-corrected as to whether the colour vector allocated to the same has its tip situated in this area, that a correction is undertaken for colour vectors having their tips situated within this area by addition of a colour correction vector which is formed by a freely selectible vector and a superimposed quantity which makes the colour correction vector a maximum when the colour vector which is to be corrected coincides with the vector of the colour which is to be corrected in maximum degree and allows the colour correction vector to remain the closer to zero the closer the tip of the colour which is to be corrected lies to the edge of this area, and that no correction is performed for colour vectors having their tips situated outside this area.

2. Method according to Claim 1, characterised in that the superimposed quantity is determined as a function of the minimum of the ratios between the distances from the tip of the vector of the colour which is to be corrected to the points of the edge of the area and the distances from the tip of the vector of the colour which is to be corrected in maximum degree from the same points of the edge of the area in each case.

3. Method according to Claim 1 or 2, characterised in that a sphere is utilised as the said area or zone.

4. Method according to Claim 1 or 2, characterised in that a cube with sides parallel to the axes of the colour space is utilised as the said area or zone.

5. Method according to Claim 4, characterised in that the superimposed quantity is determined as the minimum of the ratios between the distances of the tip of the vector of the colour which is to be corrected from the cube surfaces and the distances of the tip of the vector of the colour which is to be corrected in maximum degree from the same cube surfaces in each case.

6. Method according to one of the preceding Claims, characterised in that the colour image is reproduced on an image screen and that the colour which is to be corrected in maximum degree and/or the said zone, are adjusted in accordance with the visual observations on the image screen.

7. Method according to Claim 6, characterised in that the original colours are replaced by the corrected colours in the image reproduced on the image screen.

8. Method according to one of the preceding Claims, characterised in that portions of the image are omitted from the correction notwithstanding the colours of the image dots therein contained.

9. Logic circuit arrangement for carrying out the method according to Claim 1, characterised by a first comparator circuit (1) to be acted upon by the co-ordinates defining the said zone and by the co-ordinates of the colour vector of the image dot examined, a first subtractor circuit (2) to be acted upon by the co-ordinates defining the said zone and by the coordinates of the vector of the colour which is to be corrected in maximum degree, a second subtractor circuit (3) to be acted upon by the co-ordinates defining the said zone and by the co-ordinates of the colour vector of the image dot examined, a divider circuit (4) to be acted upon by the output quantities of the first and second subtractor circuits to determine the quotients of their input quantities, a second comparator circuit (5) to be acted upon by the output quantity of the divider circuit for determining the minimum quotient, a circuit to be acted upon by the output quantity of the second comparator circuit for delivery of the superimposed quantity (6) as a function of the output quantity of the second comparator circuit, a multiplier circuit (7) to be acted upon by the output quantity of the circuit for delivery of the superimposed quantity and by the co-ordinates of a freely selectible vector, and an adder circuit (8) to be acted upon by the co-ordinates of the colour vector of the image dot examined and by the output quantity of the multiplier circuit, and comprising an inhibitor input terminal which is to be acted upon by the output quantity of the first comparator circuit.

**Revendications**

1. Procédé de correction des couleurs d'une image, procédé selon lequel on décompose l'image en un certain nombre de points-image, on choisit une couleur qui est à corriger au maximum, on corrige d'autant plus les couleurs des points-image que ces couleurs sont proches de la couleur à corriger au maximum, dans l'espace des couleurs, et qu'il ne s'effectue plus aucune correction à partir d'une distance prédéterminée dans l'espace des couleurs, entre la couleur détectée d'un point-image et la couleur à corriger au maximum, procédé caractérisé en ce qu'on choisit une zone limitée dans l'espace autour de la pointe du vecteur associé à la couleur à corriger au maximum, en ce que pour chaque point-image dont on corrige la couleur, on vérifie si la pointe du vecteur — couleur qui lui est associé se trouve dans cette zone, on effectue une correction des vecteurs couleur dont la pointe se trouve dans cette zone en additionnant un vecteur de correction de couleur, ce vecteur étant formé d'un vecteur librement choisi et d'une grandeur complémentaire rendant maximum le vecteur de correction de couleur lorsque le vecteur-couleur à corriger coïncide avec le vecteur de la couleur à corriger au maximum, et qui met le vecteur de correction de couleur aussi près de zéro que la pointe du vecteur de couleur, à corriger se trouve proche du bord de la zone, les vecteurs-couleur dont la pointe est en dehors de cette zone ne subissant aucune correction.

2. Procédé selon la revendication 1, caractérisé en ce que la grandeur complémentaire est une fonction du minimum du rapport des distances de la pointe du vecteur de la couleur à corriger et des points du bord de la zone par rapport à la distance des pointes du vecteur à corriger au maximum et des points respectivement identiques du bord de la zone.

3. Procédé selon les revendications 1 ou 2, caractérisé en ce que la zone est une sphère.

4. Procédé selon les revendications 1 ou 2, caractérisé en ce que la zone est un cube dont les côtés sont parallèles aux axes de l'espace couleur.

5. Procédé selon la revendication 4, caractérisé en ce que la grandeur de superposition est le minimum des rapports des distances entre la pointe du vecteur de la couleur à corriger et des faces du cube par rapport aux distances entre la pointe du vecteur de la couleur à corriger au maximum et des mêmes faces du cube.

6. Procédé selon l'une des revendications précédentes, caractérisé en ce que l'image en couleur est restituée sur un écran-image et on règle la couleur à corriger au maximum et/ou la zone pour la position et la grandeur en fonction des observations visuelles faites sur l'écran.

7. Procédé selon la revendication 6, caractérisé en ce que l'image restituée par l'écran-image remplace les couleurs d'origine par les couleurs corrigées.

8. Procédé selon l'une des revendications précédentes, caractérisé en ce qu'on exclut de la correction les parties de l'image indépendamment des couleurs des points-image qui y sont contenues.

9. Circuit logique pour la mise en oeuvre du procédé selon la revendication 1, caractérisé par un premier circuit de comparaison (1) qui reçoit les coordonnées définissant la zone et les coordonnées du vecteur-couleur du point-image à examiner, un premier circuit de soustraction qui reçoit les coordonnées définissant la zone et les coordonnées du vecteur de la couleur à corriger au maximum, un second circuit soustracteur (3) qui reçoit les coordonnées définissant la zone et les coordonnées du vecteur-couleur du point-image examiné, un circuit diviseur (4) qui reçoit les grandeurs de sortie du premier et du second circuits soustracteurs pour déterminer les quotients de ces grandeurs d'entrée, un second circuit de comparaison (5) qui reçoit les grandeurs de sortie du circuit diviseur pour déterminer le minimum des quotients, un circuit qui reçoit la grandeur de sortie du second circuit comparateur pour fournir la grandeur complémentaire (6) en fonction des grandeurs de sortie du second circuit comparateur, un circuit multiplicateur (7) qui reçoit les grandeurs de sortie du circuit fournissant la grandeur complémentaire et les coordonnées d'un vecteur choisi librement, et un circuit additionneur (8) qui reçoit les coordonnées du vecteur couleur du point-image examiné et les grandeurs de sortie du multiplicateur, l'entrée d'inhibition du circuit additionneur (8) recevant la grandeur de sortie du premier circuit comparateur.

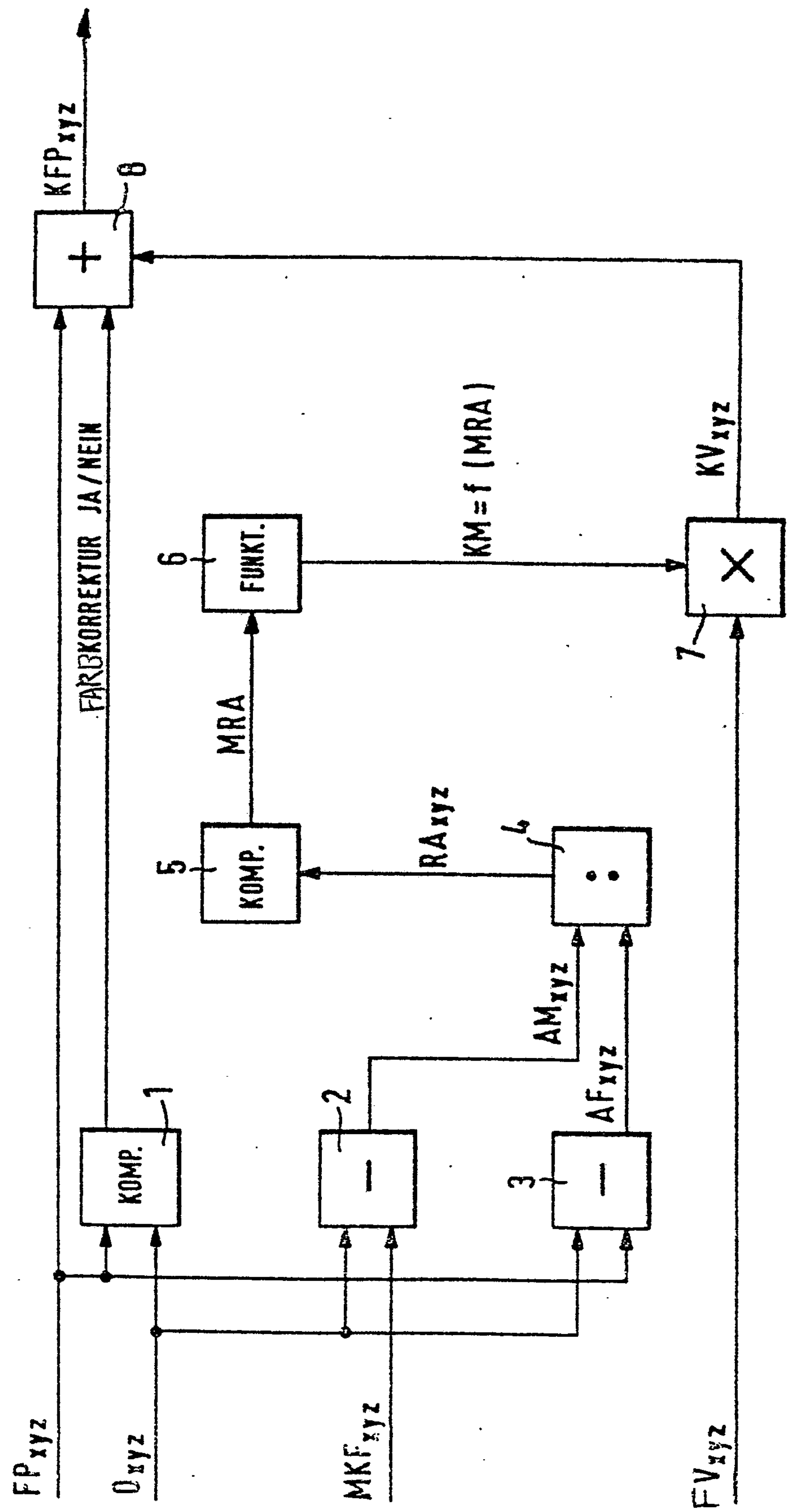
KFPxyz
8
FARBKORREKTUR JA/NEIN
6
FUNKT.
KM = f (MRA)
KVxyz
7
MRA
5
KOMP.
RAxyz
4
AMxyz
AFxyz
1
KOMP.
2
3
FPxyz
Oxyz
MKFxyz
FVxyz